# EUROPEAN PATENT SPECIFICATION

(11) **EP 2 480 063 B1**
(45) Date of publication and mention of the grant of the patent: **23.04.2014**
(21) Application number: 10819119.8
(22) Date of filing: 21.09.2010
(51) Int. Cl.: A01C 7/20, A01C 7/04, B65G 53/52

(54) **SEED METERING DEVICE ON AN AGRICULTURAL MACHINE**
SAATGUTABMESSVORRICHTUNG AN EINER LANDWIRTSCHAFTSMASCHINE
DOSEUR DE SEMENCES POUR MACHINE AGRICOLE

(30) Priority: 23.09.2009 SE 0901231
(43) Date of publication of application: 01.08.2012
(73) Proprietor: Väderstad-Verken AB, 59021 Väderstad (SE)
(72) Inventor: GILSTRING, Gert, SE-596 91 Skänninge (SE)
(74) Representative: Löfgren, Håkan Bengt Alpo
(86) International application number: PCT/SE2010/051012
(87) International publication number: WO 2011/037525

(56) References cited:
- EP-A1- 2 055 165
- EP-A1- 2 067 396
- WO-A1-2008/108732
- DE-A1-102004 021 127
- DE-A1-102007 062 967
- US-A- 3 964 639
- US-A- 4 037 755
- US-A- 4 399 757
- US-A- 4 915 258
- US-A- 5 974 988
- US-A1- 2008 011 209
- US-B1- 6 367 396
- DATABASE WPI Week 198415, Derwent Publications Ltd., London, GB; AN 1984-093684, XP003027938 & SU 1 026 684 A1 (UKR AGRIC MECH ELEC) 07 July 1983

## Description

### TECHNICAL FIELD

The invention relates to an agricultural machine according to the preamble of claim 1.

### BACKGROUND

An agricultural machine of the planter type is driven, usually towed, by a tractor, across the soil that is to be sown, and embraces a plurality of drilling units distributed in the lateral direction of the machine, each one of which drilling units is arranged to form a drill furrow in the direction of travel of the machine and, by a special device, place a row of seeds in the drill furrow. In order to provide good opportunities for the crops and the harvest, it is important that the seeds are placed at a constant, uniform distance from each other. There is also a desire to be able to keep a high speed of motion upon sowing, since the time consumption decreases thereby.

US 4,450,979 discloses a seed metering device for a planter having drilling units, each one of which has two rotatable discs inclined in opposite directions for the formation of a drill furrow, which drilling units can move vertically in relation to the frame of the planter. The seed metering devices, each one of which is fixedly connected with a respective drilling unit, are individually arranged to distribute one seed at a time to the respective drill furrow. The seed reception on the seed metering element is effected by a positive pressure on the seed side of the seed metering element. The positive pressure is separated by a brush seal as well as a baffle seal from the area where the seed clears from the seed metering element to fall down through a seed chute to the drill furrow only by means of the gravity.

In solutions of this type, disclosed in the document above, not infrequently a non-uniform distance distribution of seeds along the drill furrow is obtained, particularly upon relatively high speeds of the machine. The non-uniform distribution is caused by the fact that the seed is released at an initial speed from the seed metering element to fall by the gravity to the seed chute and through the same slide down to the drill furrow in the ground. When the seed clears from the seed metering element, there is a variation of the initial speed of the seed toward the ground depending on the vertical motions of the drilling unit and thereby of the seed metering device when driving over the irregularities of the field. The variation of initial speed results in a variation of the transportation time of the seed from the seed metering element to the drill furrow.

SE0700529 shows a solution where, by varying the speed of rotation of the seed metering element depending on the vertical motions of the seed metering device, the variation of initial speed is decreased.

Another factor of variation of the transportation time is that certain seeds bounce against the wall of the seed chute, on one hand depending on the vertical motions of the seed chute when driving over the irregularities of the field, and on the other hand depending on a variation of the fall angle of the seed, in the free fall, down into the seed chute. Variations of the transportation time from the seed metering device to the drill furrow results in a non-uniform distance distribution of seeds along the drill furrow.

US4037755 shows a planter having a central seed metering device including a seed metering element in the form of a cylinder for receiving and singulating seeds and dropping the same in a plurality of seed chutes for transportation to a respective drill furrow. The seed reception is effected by a positive pressure in the drill housing. The positive pressure is then used to create an air flow through the seed chute down to the drill furrow. The solution means on one hand that the seed metering device is arranged relatively far from the outlet of the seed chute, and on the other hand that relative motions between the same arise, which increases the risk of disturbances along the way, which also may cause a non-uniform distance distribution of seeds along the drill furrow.

Such problems described above with non-uniform distance distribution of seeds in the drill furrow may imply that the speed of motion upon sowing has to be kept relatively low.

### THE OBJECTS OF THE INVENTION

One object of the invention is to decrease the time consumption upon sowing by an agricultural machine of the planter type.

Another object of the invention is to allow higher speed of motions upon sowing by an agricultural machine of the planter type.

Another object of the invention is to provide a uniform distance positioning of seeds in the drill furrow by an agricultural machine of the planter type.

Another object of the invention is to provide a uniform distance positioning of seeds in the drill furrow by an agricultural machine of the planter type, also upon relatively high speeds of the agricultural machine.

Another object of the invention is to provide a uniform distance positioning of seeds in the drill furrow by an agricultural machine of the planter type, also in case of small seeds.

### BRIEF DESCRIPTION OF THE INVENTION

The above-mentioned objects are attained by an agricultural machine of the kind indicated by way of introduction, wherein the seed metering line has an inlet in the chamber with the purpose of, by said positive pressure in the chamber, creating an air flow for the transportation of the seeds from the chamber through the seed metering line to the drill furrow, as well as wherein the seed metering line has an outer seed line-and an inner seed line, where the inner seed line is detachably arranged in the outer seed line.

By utilizing the positive pressure that creates a pressure difference for the reception and trapping of the seeds on the seed metering element to create an air flow in the seed metering line, faster seed transportation from the seed metering element to the drill furrow is allowed. By adapting the inner diameter of the inner seed line to the size of the seed, known problems with bounces in the seed metering line can here be considerably reduced since the air current controls the direction of motion of the seed into the inlet of the seed metering line and further through the seed metering line. This allows small inner dimensions of the inner seed line and a high seed speed. This combination leads in addition to the bounce angles in the seed metering line becoming small. In this way, a more uniform length distribution of seeds in the drill row is provided.

The invention involves that the variation of the vertical speed of the seed metering device affects the distance distribution in the drill furrow to a very limited extent, since the fall distance and thereby fall time of the seed from the fact that the seed clears from the seed metering element until the seed is accelerated by the air flow in through the inlet of the seed metering line can be made very short. Thereby, the variation of the initial speed of the different seeds into the inlet of the seed metering line as a consequence of the variation of the vertical speed of the drilling unit due to ground irregularities when driving on the field becomes minimal. Furthermore, the transportation speed of the seed in the seed metering line is many times greater than the disturbance from the superimposed vertical speed of the seed metering line due to the vertical speed of the drilling unit when driving over the field.

The invention involves furthermore that the air transport of seeds through the seed metering line, from the seed metering element in the seed metering device to the drill furrow, occurs very rapidly in comparison with the free fall. This transportation time may typical be as short as approx. 0,08 s. This short time means that the speed variation that different seeds have in an air-flow transportation by different factors such as the orientation of the seed in relation to the direction of the air current, the distance of the seed to the wall where the air speed is lower, the friction of the seed against the wall, etc., does not detrimentally affect the time interval between two seeds and thereby does neither detrimentally affect the distance distribution in the drill furrow. By an inner diameter adapted to the size of the seed, this variation is decreased further since the distance of the seed to the wall is small and can be kept relatively constant.

A smaller cross-sectional area of the seed metering line further entails that a smaller air quantity is required to attain a given air speed in the line. This implies that the risk of the air flow blowing small seeds out of the drill furrow can be reduced, as well as that the energy consumption to create the air flow decreases.

Preferably, each drilling unit or the support device thereof is fixedly connected with a respective seed metering device. In this way, the seed transportation distance can be kept short and the risks of disturbances by relative motions between the drilling unit and the seed metering device be minimized.

The inlet of the seed metering line is preferably arranged in close connection to a reception area on a seed-carrying side of the seed metering element. In this way, the fall distance and thereby fall time of the seed from the fact that the seed clears from the seed metering element to the inlet of the seed metering line can be minimized.

Preferably, the inner seed line is concentrically arranged in relation to the outer seed line where the inner seed line abuts against the outer seed line. Furthermore, the outer as well as the inner seed line has preferably an essentially circular cross-section.

Preferably, the inner line extends essentially along the entire length of the seed metering line. In certain cases, it may be advantageous to allow the inner seed line to be shorter than the seed metering line. In those cases a seed sensor is arranged at the outer line, the inner line extends preferably from the inlet to a point upstream of the seed sensor in order not to disturb the function thereof.

Preferably, the inlet of the seed metering line is arranged essentially flush with the rotation axis of the seed metering element. This position is advantageous since a seed that has released from the seed metering element right opposite the pressure equalizing means will fall, even if the fall distance is short, by the gravity, in the direction straight toward the inlet of the seed metering line.

Preferably, the inlet direction of the seed metering line extends essentially in a vertical plane.

The seed metering line has preferably an inlet and an outlet that are fixed in relation to each other.

Preferably, the outer seed line has a fixed arc-shape in relation to the supporting device and seed metering device of the drilling unit. In this way, the risk of bouncing is further reduced by the fact that the seed by the centrifugal force to a greatest possible extent will follow one side of the inner wall of the seed metering line, namely the side of the wall that is farthest away from the centre of the bending radius of said arc-shape.

Preferably, the seed metering line consists of an inlet portion, an outlet portion, an outer and inner seed line, where the outer seed line has an arc-shape in a plane in the entire length thereof, whereby the force pattern from the inner seed line on the seed can be kept relatively uniform during the entire transportation.

The outer seed line has preferably an arc-shape in a plane having a constant bend radius in the entire length thereof, alternatively an arc-shape in a plane having a continuously altered bend radius in the entire length thereof, which provides a small difference of the force pattern where a constant radius cannot be attained for other reasons, such as from considerations of space. Furthermore, the continuous alteration of the radius can be adapted to the acceleration of the seed through the seed line with the purpose of achieving a uniform force along the entire transportation, alternatively applying a retarding force close to the outlet.

### DESCRIPTION OF THE FIGURES

The invention will be described in more detail below, reference being made to the drawings, in which
- Figure 1 shows a perspective view of a planter, as seen obliquely from above and obliquely from behind, according to an embodiment of the invention,
- Figure 2 shows a side view of a drilling unit comprised in the planter in Figure 1,
- Figure 3 shows a perspective view of a first embodiment of a seed metering device comprised in the drilling unit in Figure 2,
- Figure 4 shows a section A-A perpendicular to the rotation axis of the seed metering element of the first embodiment of the seed metering device according to Figure 3,
- Figure 5a shows a section B-B through the rotation axis of the seed metering element of the first embodiment of the seed metering device as in Figure 3,
- Figure 5b shows a section C-C through the inlet of the seed metering line of the first embodiment of the seed metering device in Figure 3,
- Figure 6 shows a vertical section D-D, parallel with the direction of travel of the planter, of a second embodiment of a seed metering device comprised in the drilling unit in Figure 2,
- Figure 7a shows a vertical section E-E, perpendicular to the direction of travel of the planter, of the second embodiment of the seed metering device in Figure 6,
- Figure 7b shows a vertical section F-F, perpendicular to the direction of travel of the planter, of the second embodiment of the seed metering device in Figure 6,
- Figure 8 shows a side view of a drilling unit comprised in the planter in Figure 1 of a third embodiment of a seed metering device.

### DETAILED DESCRIPTION

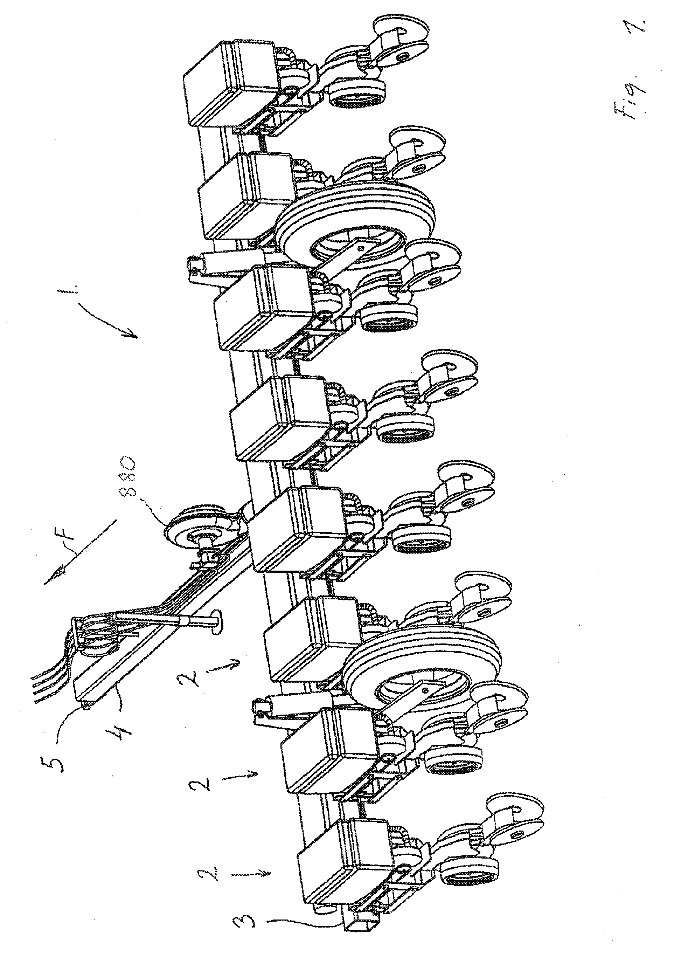

Figure 1 shows a perspective view of an agricultural machine 1 in the form of a planter according to an embodiment of the invention. The planter 1 embraces a number of, in this example eight, drilling units 2, each one of which is attached to a structural member 3 comprising a transverse steel joist. The planter 1 is, by means of a fastening member 5 arranged at a free end of a longitudinal structural component 4, arranged to be coupled behind a traction vehicle and propagated in a direction indicated by the arrow F in Figure 1. During the motion of the machine 1 across the soil that is to be sown, each one of the drilling units 2 is arranged to form a drill furrow in the direction of travel of the machine, in order to place one seed at a time along the drill furrow to form a row of seeds in the direction of travel F of the machine, as well as to close the drill furrow. A pressure-creating member, here in the form of a fan 880, is also shown.

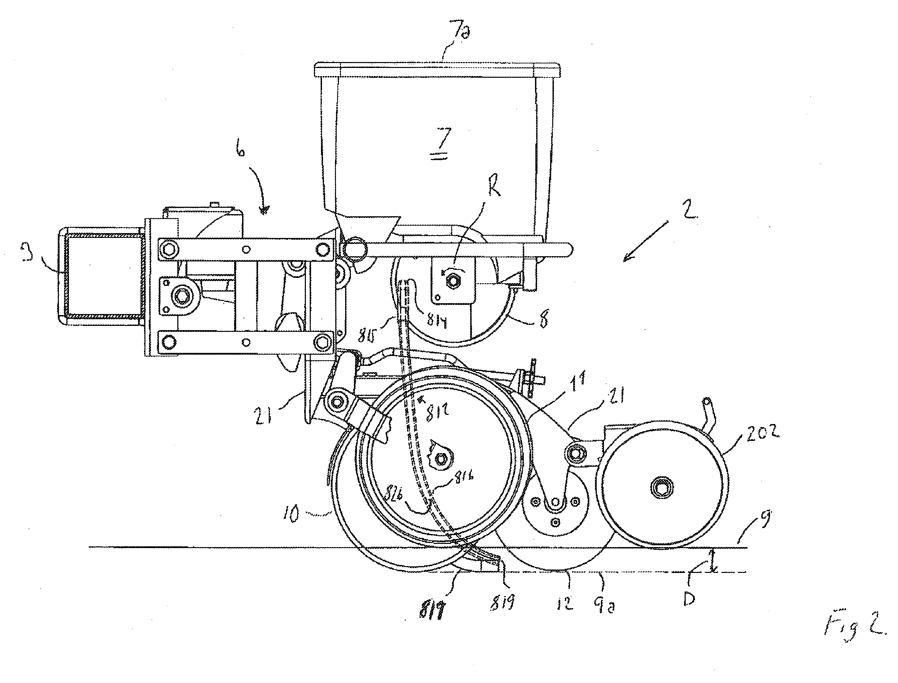

Figure 2 shows a side view of one of the drilling units 2. By means of a link device 6 described in more detail below, this is movably connected with the transverse structural member 3. The drilling unit 2 embraces a seed bin 7 that communicates with a seed metering device 8 described in more detail below and arranged to, via a seed metering line 812 (in Figure 2 represented by broken lines), distribute one seed at a time to a drill furrow 9a in the ground 9.

The drilling unit 2 embraces a supporting device 21 to which the seed metering device 8 is fixedly connected, and on which a drill furrow-forming means, comprising two rotatable discs 10 (only one of which is visible in Figure 2), is mounted and arranged to form the drill furrow 9a. In this example, the discs 10 are placed beside each other in essentially the same location in the intended direction of travel F of the machine. The discs 10 may, however, alternatively be mutually displaced in the direction of travel. The discs 10 are mutually angled and orientated so that they diverge mutually rearward and upward. When using the machine, the discs 10 are arranged to rotatingly partly penetrate down into the ground to an adjustable sowing depth D, and by said mutual divergence bring soil to the sides for the formation of the drill furrow 9a, a lower mouth or outlet 819 of the seed metering line 812 being situated immediately behind the engagement of the discs 10 with the ground 9. The mutual divergence rearward and upward of the discs 10 means that their periphery is as closest to each other in the area where they penetrate down into the ground.

A protecting member 817 keeps and protects the outlet 819 of the seed metering line against wear. The protecting member 817 may,by itself also constitute an integrated part of the proper outlet 819. The protecting member 817 also forms the bottom of the drill furrow 9a. A pressing wheel 12 slows down the speed of the seed to zero in relation to the ground and presses down the seed into the bottom of the drill furrow.

The entire seed metering line 812 that brings the seed from the seed metering device 8 to the drill furrow 9a is described herein to consist of different portions such as, for instance, an inlet 814, a connection portion 815, an outer seed line 816, an inner seed line 826 and an outlet 819. The inner seed line 826 is detachably arranged in the outer seed line 816 and is further concentrically arranged in relation to the outer seed line 816 where the inner seed line 826 abuts against the outer seed line 816. Here, the outer as well as the inner seed line 816, 826 has an essentially circular cross-section. Here, the inner seed line 826 extends along essentially the entire length of the seed metering line 812.

The farmer may thereby select an inner seed line 826 the inner diameter of which is adapted to the current seed size. The outer 816 seed line may have an outer diameter that corresponds to the size of a large seed. In these cases, the inner seed line 826 may be entirely omitted.

The outer seed line 816 may be manufactured from a hose or pipe having a straight shape of suitable stiffness and intended to be held in place into the correct shape by points of attachment on the drilling unit 2. Alternatively, the outer seed line 816 has the correct shape as unmounted and may in this case have a greater stiffness. The inner seed line 826 is suitably manufactured from a hose or any other flexible material so that it easily can be inserted into and adapted to the shape of the outer seed line 816. Preferably, the outer as well as the inner seed line 816, 826 has a smooth inside with low friction, where the inner seed line 826 has the smallest possible inner diameter without seeds jamming. The seed metering line 812 may also have another division of the included parts.

In this example, the drilling unit 2 embraces also here finishing members 202, not described in more detail, arranged to close the drill furrow 9a. The drilling unit 2 may also embrace preparing members not shown in the figures.

The drilling unit 2 is arranged to be carried by two supporting wheels 11, situated on each side of the pair of discs 10, the wheel shafts of the supporting wheels 11 being situated somewhat behind the disc shafts in the intended direction of travel F of the machine. More precisely, the supporting wheels 11 are situated on both sides of the pair of discs 10, as seen transverse to the intended direction of travel F of the agricultural machine 1, as well as in a vicinity of the respective disc 10, and are arranged to, during use, prevent soil from being thrown away from the drill furrow by the discs 10. According to prior art, the sowing depth D is adjustable by adjustment of the height of the supporting wheels 11 in relation to the discs 10.

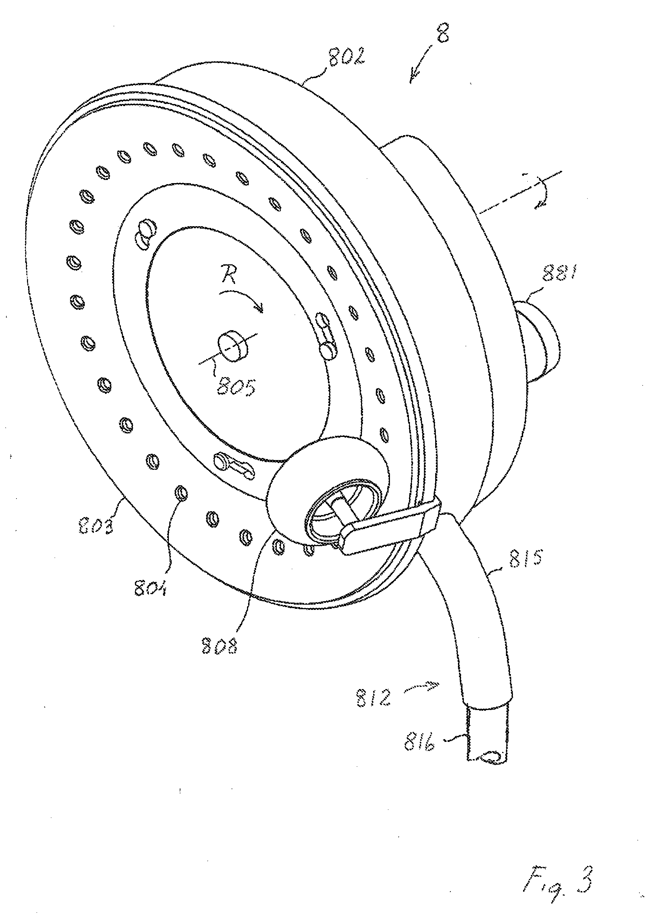

Figure 3 shows a perspective view of a seed metering device 8 according to a first embodiment. The seed metering device 8 embraces a casing 802 as well as a connection portion 815 of the seed metering line 812 turned outward from the casing, to which the outer seed line 816 is attached. The seed metering device 8 embraces a seed metering element 803, which is arranged in the casing 802.

The seed metering element 803 is arranged to, by means of a driving device, not described in more detail herein, rotate around a seed metering shaft or rotation axis 805, as is indicated in Figure 3 by the arrow R. The seed metering element 803 is suitably detachably arranged at the seed metering device 8 in order to allow a rapid and simple replacement, for instance, to a seed metering element adapted to another type of seed.

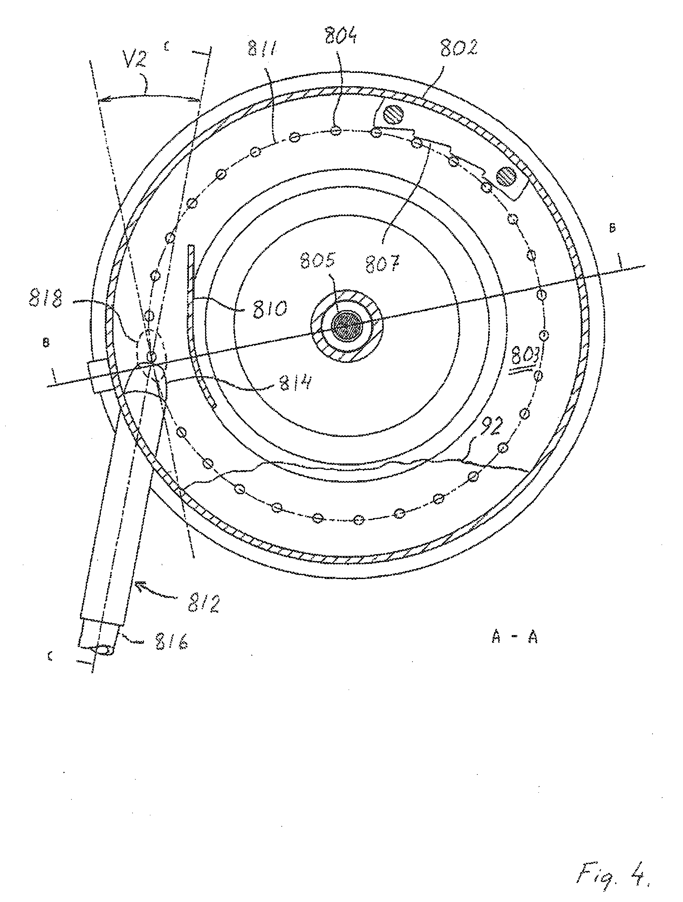

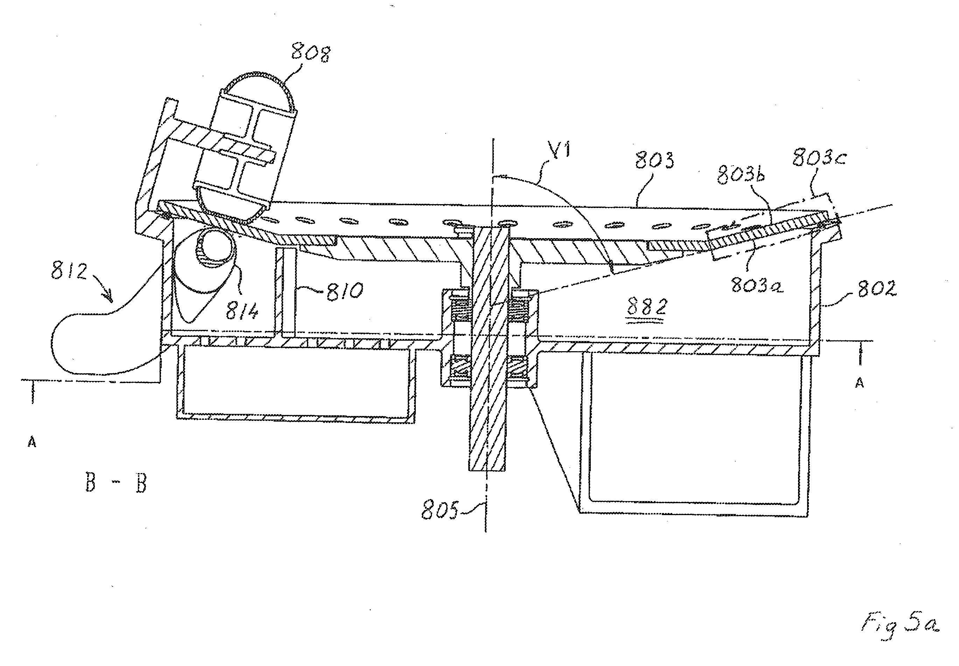

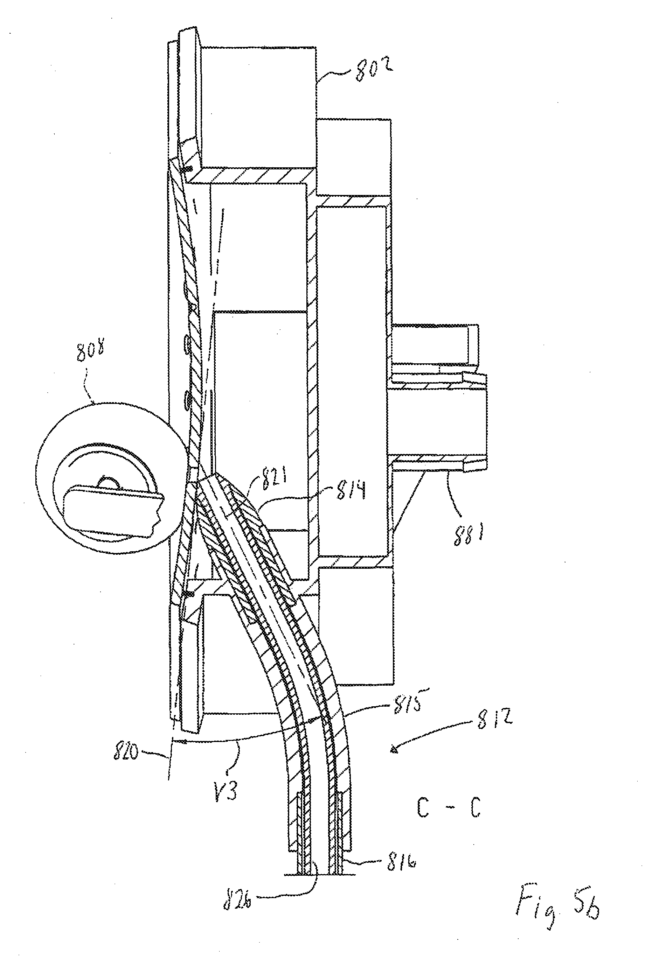

Here, reference is made also to Figures 4, 5a and 5b. Figure 4 is a section A-A in Figure 5a. Figure 5a is a section B-B in Figure 4. Figure 5b is a section C-C in Figure 4. The seed metering device 8 comprises a chamber 882 limited by the inside of the casing 802, as well as by a seed-carrying inside 803a of the seed metering element 803. A positive pressure is created in said chamber 882 by the fan 880 (Figure 1), connected via lines to a respective connection 881 on each seed metering device 8. In use, seeds are gravity fed from the seed bin 7 (Figure 2) into the chamber 882 whereupon a small seed volume 92 is maintained in the chamber. Then, a positive pressure is created also in the seed bin 7, which because of that comprises a tight cover 7a (Figure 2).

The inlet 814 and connection portion 815 of the seed metering line can be seen as an inlet portion. Here, the connection portion 815 constitutes an integrated part of the casing 802 that connects the inlet 814 arranged in the chamber 882 with the outer seed line 816. The outer seed line 816 is connected to the connection portion 815 outside the chamber 882. The inner seed line 826 extends from the inlet 814 through the connection portion 815 and into the outer seed line 816. The inlet 814 and the connection portion 815 may also be an integrated part, which in turn is not necessarily integrated with the casing 802. The inlet 814 and the outlet 819 are fixed in relation to each other, for instance by the outlet 819 being fixed to the protecting member 817 or, via some part, fixed to the support device 21, as well as by the inlet being fixed to the seed metering device 8, which in turn is fixed to the support device 21 The outlet 819 may further consist of the lower end of the outer seed line 816.

Upon replacement of the inner seed line 826 to another dimension, first the seed metering element 803 is dismounted, and after that the inner seed line is pulled out of the inlet and is replaced by a seed line having another inner diameter. Next, the seed metering element 803 is mounted. At the same time, also the seed metering element 803 is usually replaced by another one, since also these most often are adapted according to the seed size.

In this first embodiment, the seed metering element has 803 a rotationally symmetrical shape around the rotation axis 805. The seed metering element 803 constitutes a wall limiting the chamber 882 and has through holes 804 to receive and drop seed. The holes 804 are distributed equidistantly from each other along a pitch circle 811 concentric with the rotation axis 805 of the seed metering element. The cross-section of the seed metering element has a first angle V1 to the rotation axis thereof at a portion 803c at the pitch circle 811. The first angle V1 is here approx. 75° and should be within an interval between 45° and 135°. Here, the holes 804 are essentially shown cylindrical but they may also be formed with depressions on the seed-carrying side 803a of the seed metering element, which depressions also are called cells. The positive pressure in the chamber 882 creates a pressure difference between the inside 803a (the seed-carrying side) of the seed metering element 803 and the outside 803b thereof where it is normal air pressure. Accordingly, a pressure difference arises through the holes 804 of the seed metering element since the same connect the chamber 882 with the surroundings. The holes may, if desired, be replaced by recesses along the periphery of the seed metering element 803, where said recesses then form channels between the casing 802 and the seed metering element 803.

By surroundings, here is meant not necessarily only normally surrounding air pressure, but also an area with another air pressure, which however is below the positive pressure prevailing in the chamber 882, a corresponding pressure difference being attained, is included.

Thanks to the pressure difference, a seed is caught at each hole 804 when it passes the seed volume 92, from there the respective seed is transported by the rotation of the seed metering element 803 toward the inlet 814 of the seed metering line 812. The seed metering device 8 may be equipped with a double eliminator 807 that preferably is adjustable, here in the form of a cam, in order to remove extra seeds in a hole. Seeds on the seed metering element pass the double eliminator, which alternatively may consist of spikes, rolls or bristles, on their way to the inlet 814 of the seed metering line.

A pressure equalizing means 808, here in the form of a roll 808, on the non-seed-carrying outside 803b of the seed metering element, blocks the holes 804 within an area on the seed metering element 803, opposite an area 818 on the seed-carrying side 803a of the seed reception element, here denominated reception area. Within this area, the pressure difference is eliminated through the holes 804 and thereby also the force retaining the seed, a seed no longer being trapped to its hole and therefore easily being able to be received by the inlet 814 of the seed metering line.

The positive pressure in the chamber 882 creates simultaneously an air flow out of the seed metering device through the seed metering line 812 for the transportation of the seeds to the drill furrow 9a.

The seed metering device 8 has a partition wall 810 with the purpose of preventing loose seeds, for instance rejected from the double eliminator 807, in the chamber 882 from being captured by the inlet 814 of the seed metering line or knocking away, alternatively disturbing, a seed sitting in a hole 804 on its way to the inlet 814 of the seed metering line. The partition wall 810 is suitably open at the bottom in order to allow the seeds that for some reason have passed beside the inlet 814 of the seed metering line to be brought back to the seed volume 92.

The inlet 814 of the seed metering line is arranged in close connection to, and directed toward, said reception area 818 on the seed-carrying side 803a of the seed metering element. The inlet 814 of the seed metering line has an essentially circular cross-section, which has turned out to be favourable to an optimal air flow with small disturbances. The inlet 814 has furthermore an inlet direction 821 directed at a second angle V2 to the tangent of the pitch circle 811 at the reception area 818, as well as a third angle V3 to the surface of the seed metering element in the middle of the reception area 818.

More precisely, the second angle V2 is an angle between the inlet direction 821 projected on a plane 820 being tangent to the seed-carrying side 803a of the seed metering element in the middle of the reception area 818 and a line in said plane 820 that is tangent to the pitch circle 811. The second angle V2 is preferably smaller than 30°, here approx. 22°. More precisely, the third angle V3 is an angle between said inlet direction 821 and said plane 820

The first, second and third angle V1, V2, V3 may be varied within relatively wide limits in order to be optimized for an as uniform as possible distance distribution in the drill furrow, since the angles do not only affect the function in the reception of the different seeds from the seed metering element 803 into the inlet 804 of the seed metering line but also affect the overall shape and length of the seed metering, where the angle between the inlet 814 of the seed metering and the outer seed line 816 as well as the curvature of the seed line 816 play a decisive role. In order to further affect the above-mentioned, it is possible, in particular upon driving the seed metering shaft 805 via a flexible shaft or by an electric motor (not shown), to arrange the rotation axis 805 of the seed metering element in another way than horizontal and/or perpendicular to the direction of travel of the planter F.

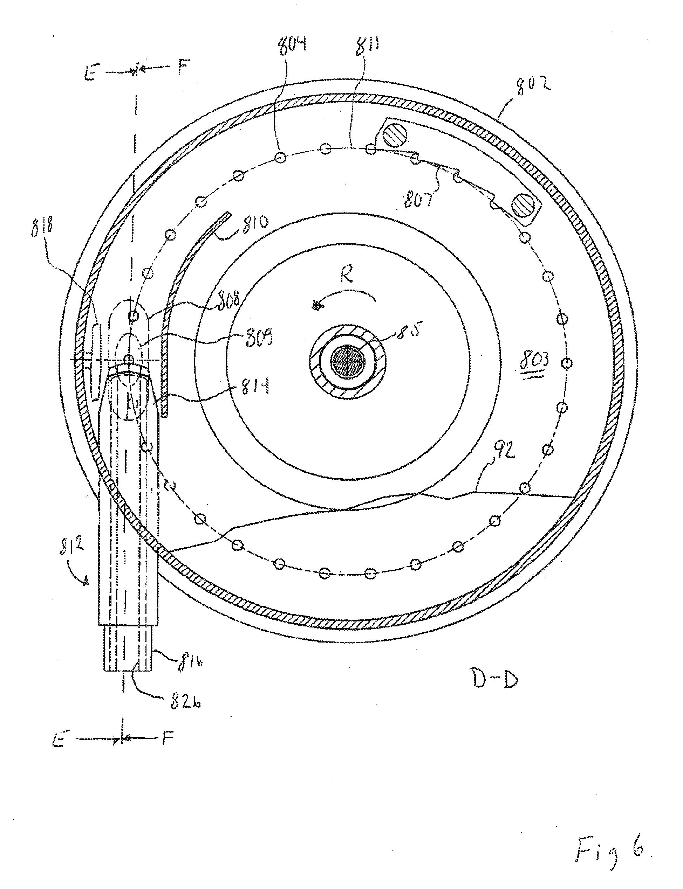

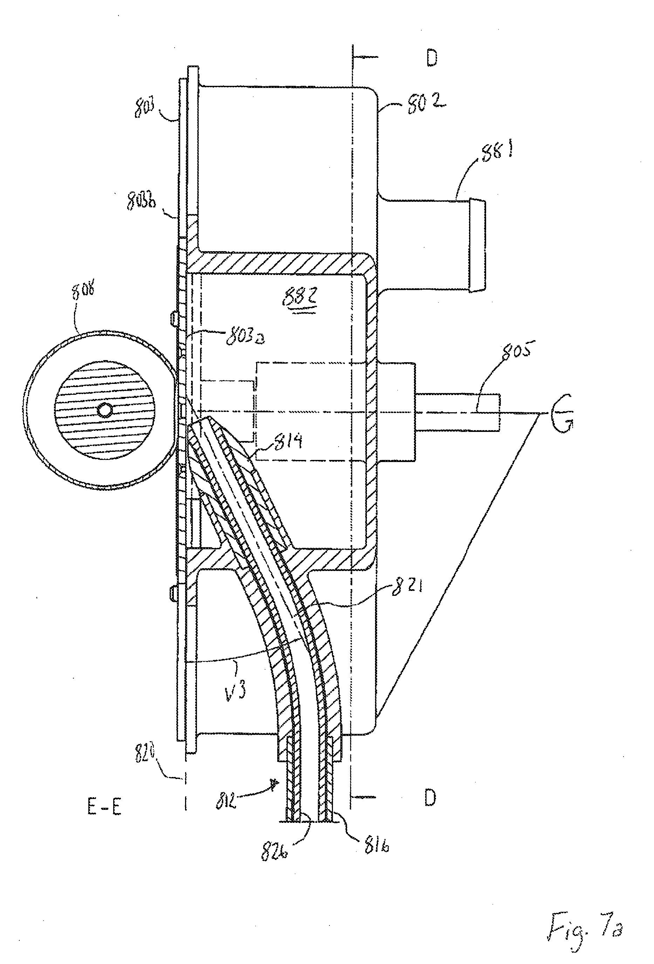

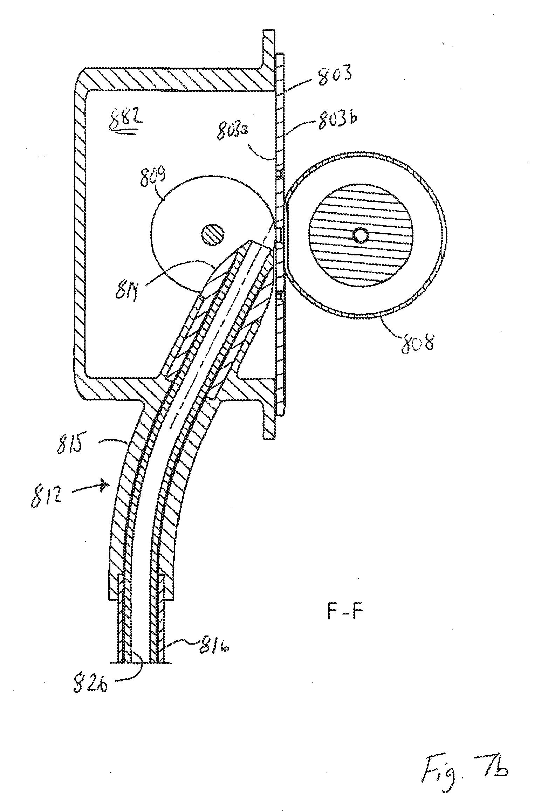

Figure 6, Figure 7a and Figure 7b show three sections of the second embodiment. Figure 6 is a section D-D in Figure 7a. Figure 7a is a section E-E in Figure 6. Figure 7b is a section F-F in Figure 6. This second embodiment demonstrates a special case of the first embodiment where the first angle V1 of the seed metering element 803 is 90°, which means that the seed metering element 803 is in the form of a seed metering disc.

Furthermore, the second angle V2 is 0°. Accordingly, the inlet 814 of the seed metering line is directed essentially in a tangential plane in relation to the pitch circle 811 of the seed-carrying holes 804. The inlet direction 821 of the seed metering line extends in a vertical plane and has furthermore a third angle V3 in relation to the surface of the seed metering element in the reception area 818 of approx. 30°. An interval of the third angle V3 between 10° and 50° has turned out to be favourable and preferably within an interval between 20° and 40°, and most preferably essentially 30°. According to the second embodiment, the reception area 818 and thereby also the inlet 814 are essentially flush with the rotation axis 805 of the seed metering element.

This second embodiment has also a supporting roll 809, beside the inlet 814 of the seed metering line on the seed-carrying side 803a of the seed metering element. Said supporting roll constitutes a support to the seed metering element 803 and an abutment of the force that the pressure equalizing means 808, here in the form of a roll, applies to the outside 803b of the seed metering element in order to shut off the holes in the seed metering element. The supporting roll 809 has also a secondary function to hold the seed-carrying side 803a of the seed metering element as close as possible to the inlet 814 of the seed metering line without the seed metering element 803 contacting the inlet 814.

The seed metering device 8 may also have means for agitation of the seed volume 92 in the lower part of the seed metering device in order to facilitate the reception of seeds on the seed metering element 803, which is not shown here. The seed metering device 8 has a partition wall 810.

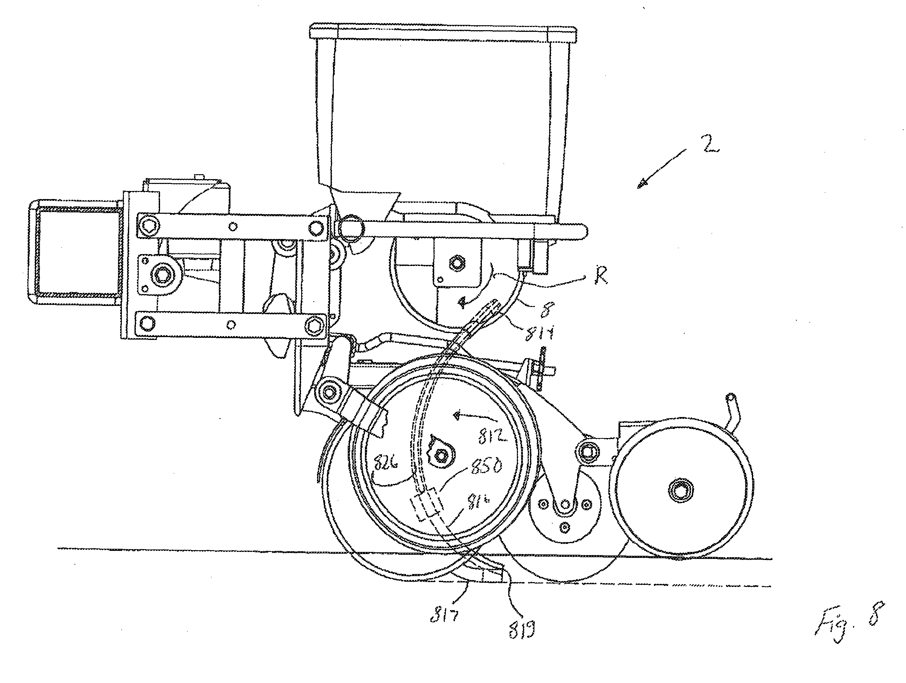

Figure 8 shows a third embodiment of a seed metering device 8 comprised in the drilling unit 2. This embodiment has an opposite direction of rotation R of the seed metering element in comparison with the other embodiments. Furthermore, the inlet 814 of the seed metering line is placed under the rotation axis 805 of the seed metering element. In doing so, the seed metering line becomes shorter as well as can be formed with a uniform, or less varied, bend radius, in essentially the entire length thereof.

The outer seed line 816 has an arc-shape in a plane in the entire length thereof. The arc-shape may have a constant bend radius in the entire length thereof or a continuously altered bend radius in the entire length thereof.

Here, also a seed sensor 850 is arranged at the outer seed line 816. Here, the inner seed line 826 extends from the inlet 814 to a point immediately upstream of the seed sensor 850. Alternatively, the seed sensor 850 may be arranged at the connection portion 815 on a location outside the casing 802.

The entire seed metering line 812 has a fixed arc-shape in relation to the supporting device 21 and seed metering device 8 of the drilling unit 2.

The driving device, not shown, may according to prior art consist of, for instance, a hydraulic motor or a supporting wheel that, via a chain transmission or flexible shafts, drives a number of seed metering devices, or the driving device may alternatively consist of one electric motor on each seed metering device. The driving device is, also according to prior art, arranged so that the speed of rotation of the seed metering element 803 around the seed metering shaft 805 increases as the speed of the agricultural machine increases, and vice versa.

The angles indicated in the description are given only as numbers without distinction of direction.

The invention may be varied in a number of different ways within the scope of the claims. For instance, embodiments that are combinations of the embodiments accounted for here may occur.

Furthermore, the invention may be applied to an agricultural machine according to US403775 having a central seed metering device for seed metering via a plurality of seed metering lines to a respective drill furrow. From certain aspects, this provides a simpler design. The embodiments described above having one seed metering device per drilling unit provide however advantages in the form of a simpler and shorter seed line routing and thereby reduced risks of disturbance.

Furthermore, the first angle V1 may be all the way down to 0°, so that the outer part of the seed metering element becomes parallel to the rotation axis and that the seed-carrying surface thereof describes a cylindrical inner or outer envelope surface. The latter case allows an as small as possible change of direction of the seed into the inlet.

## Claims

1. Agricultural machine embracing at least one drilling unit (2) in turn comprising a support device (21), which agricultural machine comprises at least one seed metering device (8) for distributing seeds to a drill furrow (9a) in the ground (9) across which the agricultural machine (1) moves, the drilling unit (2) being movably connected with a structural member (3), embraced by the agricultural machine, via a support device (21), the seed metering device (8) embracing a seed metering element (803) that by means of a driving device is arranged to transport seeds to one or more seed metering lines (812), where the seed metering device (8) comprises a chamber (882) for seeds (92), which chamber (882) is arranged to be supplied with a positive pressure from a pressure-creating member (880) embraced by the agricultural machine, where the seed metering element (803) is a wall limiting the chamber (882) and at which holes (804) or recesses are arranged, which holes/recesses (804) connect the chamber (882) with the surroundings, with the purpose of, by the pressure difference arisen hereby, attaching and transporting seeds at said holes/recesses (804) of the seed metering element (803),
that the seed metering line (812) has an inlet (814) in the chamber (882), with the purpose of, by said positive pressure in the chamber (882), creating an air flow for the transportation of the seeds from the chamber (882) through the seed metering line (812) to the drill furrow (9a), **characterized in that** the seed metering line (812) has an outer seed line (816) and an inner seed line (826), where the inner seed line (826) is detachably arranged in the outer seed line (816).

2. Agricultural machine according to claim 1, wherein the seed metering device (8) is fixedly connected with a drilling unit (2) or the support device (21) thereof.

3. Agricultural machine according to any one of claims 1 or 2, wherein the inlet (814) of the seed metering line is arranged in close connection to a reception area (818) on a seed-carrying side (803a) of the seed metering element (803), where the seed metering element (803) preferably is a seed metering disc.

4. Agricultural machine according to any one of claims 1-3, wherein the inner seed line (826) is concentrically arranged in relation to the outer seed line (816), and where the inner seed line (826) abuts against the outer seed line (816).

5. Agricultural machine according to any one of claims 1-4, wherein the outer as well as the inner seed line (816, 826) has an essentially circular cross-section.

6. Agricultural machine according to any one of claims 1-5, wherein the inner seed line (826) extends along essentially the entire length of the seed metering line (812).

7. Agricultural machine according to any one of claims 1-6, wherein the inner seed line (826) is shorter than the seed metering line (812).

8. Agricultural machine according to claim 7, wherein a seed sensor (850) is arranged at the outer seed line (816), where the inner line (826) extends from the inlet (814) to a point upstream of the seed sensor (850).

9. Agricultural machine according to any one of claim 1-8, wherein the inlet (814) of the seed metering line is arranged essentially flush with the rotation axis (805) of the seed metering element.

10. Agricultural machine according to any one of claims 1-9, wherein the inlet direction (821) of the seed metering line essentially extends in a vertical plane.

11. Agricultural machine according to any one of claims 1-10, wherein the seed metering line (812) has an inlet (814) and an outlet (819) that are fixed in relation to each other.

12. Agricultural machine according to any one of claims 1-11, wherein the seed metering line consists of an inlet portion (814, 815), an outlet portion (819), an outer and an inner seed line (816, 826), which outer seed line (816) has an arc-shape in a plane in the entire length thereof.

13. Agricultural machine according to claim 12, wherein the outer seed line (816) has an arc-shape in a plane having a constant bend radius in the entire length thereof.

14. Agricultural machine according to claim 12, wherein the outer seed line (816) has an arc-shape in a plane having a continuously altered bend radius in the entire length thereof.

## Patentansprüche

1. Landwirtschaftliche Maschine, die mindestens eine Drilleinheit (2) umfasst, die wiederum eine Stützvorrichtung (21) umfasst, wobei die landwirt-schaftliche Maschine mindestens eine Saatgutdosiervorrichtung (8) zur Verteilung von Saatgut zu einer Drillfurche (9a) im Boden (9), über die sich die landwirtschaftliche Maschine (1) bewegt, umfasst, wobei die Drilleinheit (2) über eine Stützvorrichtung (21) beweglich mit einem Strukturelement (3) verbunden ist, das von der landwirt-schaftlichen Maschine umfasst ist, wobei die Saatgutdosiervorrichtung (8) ein Saatgutdosierorgan (803) aufweist, das so angeordnet ist, dass es mittels einer Antriebsvorrichtung Saatgut zu einer oder mehreren Saatgutdosierleitungen (812) transportiert, wobei die Saatgutdosiervorrichtung (8) eine Kammer (882) für Saatgut (92) umfasst, wobei die Kammer (882) dazu angeordnet ist, mit einem Überdruck von einem Druckerzeugungsglied (880) versorgt zu werden, das an der landwirtschaft-lichen Maschine vorgesehen ist, wo das Saatgutdosierorgan (803) eine Wand ist, die die Kammer (882) begrenzt und in der Löcher (804) oder Aussparungen angeordnet sind, wobei diese Löcher/Aussparungen (804) die Kammer (882) mit der Umgebung verbinden, um durch die dadurch erzeugte Druckdifferenz an den Löchern/Aussparungen (804) des Saatgutdosierorgans (803) Saatgut festzuhalten und zu transportieren,
dass die Saatgutdosierleitung (812) einen Einlass (814) in der Kammer (882) aufweist, um durch den Überdruck in der Kammer (882) einen Luftstrom zum Transport des Saatguts aus der Kammer (882) durch die Saatgutdosierleitung (812) zur Drillfurche (9a) zu erzeugen, **dadurch gekennzeichnet, dass** die Saatgutdosierleitung (812) eine äußere Saatgutleitung (816) und eine innere Saatgutleitung (826) hat, wobei die innere Saatgutleitung (826) lösbar in der äußeren Saatgutleitung (816) angeordnet ist.

2. Landwirtschaftliche Maschine nach Anspruch 1, wobei die Saatgutdosiervorrichtung (8) fest mit einer Drilleinheit (2) oder ihrer Stützvorrichtung (21) verbunden ist.

3. Landwirtschaftliche Maschine nach Anspruch 1 oder 2, wobei der Einlass (814) der Saatgutdosierleitung in enger Verbindung mit einem Aufnahmebereich (818) auf einer Saatgut tragenden Seite (803a) des Saatgutdosierorgans (803) angeordnet ist, wobei das Saatgutdosierorgan (803) vorzugsweise eine Saatgutdosierscheibe ist.

4. Landwirtschaftliche Maschine nach einem der Ansprüche 1 - 3, wobei die innere Saatgutleitung (826) konzentrisch bezüglich der äußeren Saatgutleitung (816) angeordnet ist und wobei die innere Saatgutleitung (826) an die äußere Saatgutleitung (816) anschlägt.

5. Landwirtschaftliche Maschine nach einem der Ansprüche 1 - 4, wobei sowohl die äußere als auch die innere Saatgutleitung (816, 826) einen im Wesentlichen kreisförmigen Querschnitt haben.

6. Landwirtschaftliche Maschine nach einem der Ansprüche 1 - 5, wobei sich die innere Saatgutleitung (826) entlang im Wesentlichen der gesamten Länge der Saatgutdosierleitung (812) erstreckt.

7. Landwirtschaftliche Maschine nach einem der Ansprüche 1 - 6, wobei die innere Saatgutleitung (826) kürzer als die Saatgutdosierleitung (812) ist.

8. Landwirtschaftliche Maschine nach Anspruch 7, wobei ein Saatgutsensor (850) an der äußeren Saatgutleitung (816) angeordnet ist, wo sich die innere Leitung (826) vom Einlass (814) zu einer stromaufwärts vom Saatgutsensor (850) liegenden Stelle erstreckt.

9. Landwirtschaftliche Maschine nach einem der Ansprüche 1 - 8, wobei der Einlass (814) der Saatgutdosierleitung im Wesentlichen fluchtend mit der Drehachse (805) des Saatgutdosierelements angeord-net ist.

10. Landwirtschaftliche Maschine nach einem der Ansprüche 1 - 9, wobei die Einlassrichtung (821) der Saatgutdosierleitung im Wesentlichen in einer vertikalen Ebene verläuft.

11. Landwirtschaftliche Maschine nach einem der Ansprüche 1 - 10, wobei die Saatgutdosierleitung (812) einen Einlass (814) und einen Auslass (819) auf-weist, die bezüglich einander festgelegt sind.

12. Landwirtschaftliche Maschine nach einem der Ansprüche 1 - 11, wobei die Saatgutdosierleitung aus einem Einlassteil (814, 815), einem Auslassteil (819) sowie einer äußeren und einer inneren Saatgutleitung (816, 826) besteht, wobei die äußere Saatgutleitung (816) über ihre gesamte Länge eine Bogenform in einer Ebene aufweist.

13. Landwirtschaftliche Maschine nach Anspruch 12, wobei die äußere Saatgutleitung (816) eine Bogenform in einer Ebene mit einem konstanten Krümmungsradius über ihre gesamte Länge aufweist.

14. Landwirtschaftliche Maschine nach Anspruch 12, wobei die äußere Saatgutleitung (816) eine Bogenform in einer Ebene mit einem sich kontinuierlich ändernden Krümmungsradius über ihre gesamte Länge aufweist.

## Revendications

1. Machine agricole incluant au moins une unité de semis (2) comprenant à son tour un dispositif de support (21), ladite machine agricole comprenant au moins un dispositif de dosage de semences (8) destiné à distribuer des semences dans un sillon de semis (9a) dans le sol (9) parcouru par la machine agricole (1), l'unité de semis (2) étant raccordée de façon déplaçable à un organe structurel (3), inclus dans la machine agricole, par le biais d'un dispositif de support (21), le dispositif de dosage de semences (8) incluant un élément de dosage de semences (803) qui, au moyen d'un dispositif d'entraînement, est conçu pour acheminer les semences jusqu'à un ou plusieurs conduits de dosage de semences (812), le dispositif de dosage de semences (8) comprenant un compartiment (882) pour les semences (92), ledit compartiment (882) étant conçu pour être soumis à une pression positive au moyen d'un organe de création de pression (880) inclus dans la machine agricole, l'élément de dosage de semences (803) étant une paroi limitant le compartiment (882) et au niveau de laquelle des trous (804) ou des évidements sont disposés, lesdits trous/évidements (804) raccordant le compartiment (882) avec l'espace environnant, dans le but, par le biais de la différence de pression en résultant, de fixer et acheminer des semences au niveau desdits trous/évidements (804) de l'élément de dosage de semences (803),
le conduit de dosage de semences (812) comportant une entrée (814) dans le compartiment (882), dans le but, par le biais de ladite pression positive dans le compartiment (882), de créer un flux d'air pour l'acheminement des semences depuis le compartiment (882), le long du conduit de dosage de semences (812) et jusqu'au sillon de semis (9a), **caractérisée en ce que** le conduit de dosage de semences (812) comporte un conduit à semences extérieur (816) et un conduit à semences intérieur (826), le conduit à semences intérieur (826) étant disposé de façon amovible dans le conduit à semences extérieur (816).

2. Machine agricole selon la revendication 1, dans laquelle le dispositif de dosage de semences (8) est raccordé de manière fixe à une unité de semis (2) ou au dispositif de support (21) de celle-ci.

3. Machine agricole selon l'une quelconque des revendications 1 et 2, dans laquelle l'entrée (814) du conduit de dosage de semences est disposée de façon à être étroitement raccordée à une zone de réception (818) sur un côté porteur de semences (803a) de l'élément de dosage de semences (803), l'élément de dosage de semences (803) étant de préférence un disque de dosage de semences.

4. Machine agricole selon l'une quelconque des revendications 1 à 3, dans laquelle le conduit à semences intérieur (826) est disposé de manière concentrique par rapport au conduit à semences extérieur (816), le conduit à semences intérieur (826) étant en contact avec conduit à semences extérieur (816).

5. Machine agricole selon l'une quelconque des revendications 1 à 4, dans laquelle le conduit à semences extérieur tout comme le conduit à semences intérieur (816, 826) présente une section transversale essentiellement circulaire.

6. Machine agricole selon l'une quelconque des revendications 1 à 5, dans laquelle le conduit à semences intérieur (826) s'étend essentiellement le long de la longueur entière du conduit de dosage de semences (812).

7. Machine agricole selon l'une quelconque des revendications 1 à 6, dans laquelle le conduit à semences intérieur (826) est plus court que le conduit de dosage de semences (812).

8. Machine agricole selon la revendication 7, dans laquelle un capteur de semences (850) est disposé au niveau du conduit à semences extérieur (816), le conduit intérieur (826) s'étendant de l'entrée (814) à un point en amont du capteur de semences (850).

9. Machine agricole selon l'une quelconque des revendications 1 à 8, dans laquelle l'entrée (814) du conduit de dosage de semences est disposée de façon à être essentiellement au même niveau que l'axe de rotation (805) de l'élément de dosage de semences.

10. Machine agricole selon l'une quelconque des revendications 1 à 9, dans laquelle la direction de l'entrée (821) du conduit de dosage de semences s'étend essentiellement dans un plan vertical.

11. Machine agricole selon l'une quelconque des revendications 1 à 10, dans laquelle le conduit de dosage de semences (812) comporte une entrée (814) et une sortie (819) qui sont fixes l'une par rapport à l'autre.

12. Machine agricole selon l'une quelconque des revendications 1 à 11, dans laquelle le conduit de dosage de semences est constitué d'une partie d'entrée (814, 815), d'une partie de sortie (819), et de conduits à semences intérieur et extérieur (816, 826), ledit conduit à semences extérieur (816) présentant une forme arquée dans un plan sur sa longueur entière.

13. Machine agricole selon la revendication 12, dans laquelle le conduit à semences extérieur (816) présente une forme arquée dans un plan présentant un rayon de courbure constant sur sa longueur entière.

14. Machine agricole selon la revendication 12, dans laquelle le conduit à semences extérieur (816) présente une forme arquée dans un plan présentant un rayon de courbure continuellement modifié sur sa longueur entière.
